# EUROPÄISCHE PATENTSCHRIFT

(11) **EP 1 084 904 B1**
(45) Veröffentlichungstag und Bekanntmachung des Hinweises auf die Patenterteilung: **06.09.2006**
(21) Anmeldenummer: 00115193.5
(22) Anmeldetag: 13.07.2000
(51) Int. Cl.: B60N 3/10

(54) **Haltevorrichtung für einen Getränkebehälter**
Holding device for a beverage container
Dispositif de maintien pour récipient de boisson

(30) Priorität: 18.09.1999 DE 19944817
(43) Veröffentlichungstag der Anmeldung: 21.03.2001
(73) Patentinhaber: fischerwerke Artur Fischer GmbH & Co. KG, 72178 Waldachtal (DE); DaimlerChrysler AG, 70546 Stuttgart (DE)
(72) Erfinder: Fischer, Heinz, 72178 Waldachtal (DE); Nienhaus, Ulrich, 72202 Nagold (DE); Aigner, Michaela, 71034 Böblingen (DE)

(56) Entgegenhaltungen:
- EP-A- 0 756 965
- DE-A- 19 717 011
- US-A- 5 489 054
- PATENT ABSTRACTS OF JAPAN vol. 018, no. 398 (M-1645), 26. Juli 1994 (1994-07-26) -& JP 06 115392 A (NISSAN MOTOR CO LTD;OTHERS: 01), 26. April 1994 (1994-04-26)
- PATENT ABSTRACTS OF JAPAN vol. 1995, no. 07, 31. August 1995 (1995-08-31) -& JP 07 101283 A (TOYODA GOSEI CO LTD), 18. April 1995 (1995-04-18)

## Beschreibung

Die Erfindung betrifft eine Haltevorrichtung für einen Getränkebehälter wie beispielsweise eine Getränkedose, eine Tasse oder einen Becher, die zum Einbau in beispielsweise ein Amaturenbrett eines Kraftwagens vorgesehen ist, mit den Merkmalen des Oberbegriffs des Anspruchs 1.

Derartige Haltevorrichtungen sind an sich bekannt. Sie weisen einen Schlitten auf, der mit einer Schiebeführung schubladenartig aus einer eingeschobenen in eine ausgezogene Stellung verschiebbar geführt ist. Der Schlitten selbst oder ein an ihm angebrachter Halter weist eine üblicherweise kreisförmige Einstellöffnung auf, in die in der ausgezogenen Stellung des Schlittens der Getränkebehälter einstellbar ist. In der eingeschobenen Stellung schließt der Schlitten oder der Halter vorzugsweise bündig mit dem Amaturenbrett oder dgl. ab.

Beispiele derartiger Haltevorrichtungen zeigen die beiden Druckschriften US-A-5,489,054 und EP-A-0 756 965. Die Haltevorrichtung aus der US-A-5,489,054 weist einen schubladenartig ausfahrbaren Schlitten mit einem Halter zum Einstellen eines Getränkebehälters auf jeder Seite des Schlittens auf, die federbetätigt nach außen schwenken, wenn der Schlitten ausgefahren wird. In der EP-A-0 756 965 weist der Schlitten selbst eine Einstellöffnung zum Einstellen eines Getränkebehälters auf. Am Schlitten ist ein Halter mit einer zweiten Einstellöffnung für einen Getränkebehälter angebracht, der ebenfalls federbetätigt beim Ausfahren des Schlittens zur Seite nach außen schwenkt.

Die bekannten Haltevorrichtungen haben den Nachteil, dass sie in der ausgezogenen Stellung unter ihnen angebrachte Bedien- oder Anzeigeelemente verdecken und dadurch deren Zugänglichkeit oder Ablesbarkeit behindern. Auch bei der Betätigung eines Ganghebels kann der Schlitten mit dem Halter in der ausgezogenen Stellung im Wege sein.

Um eine Kollision mit einem Ganghebel zu vermeiden weisen die Haltevorrichtungen aus den Druckschriften DE-A-197 17 011, JP-A-06 115 392 und JP-A-07 101 283 ebenfalls Halter auf, die zur Seite schwenkbar an schubladenartig ausfahrbaren Schlitten angebracht sind. Allerdings sind diese Haltevorrichtungen so konstruiert, dass ihre Schlitten nicht oder nicht weit aus einem Gehäuse oder dgl. ausfahren und dass ein Freiraum neben bzw. zwischen den Haltern mit den Einstellöffnungen für den Getränkebehälter in einer Fahrzeugmitte besteht, um den Ganghebel ohne Kollision mit dem Schlitten oder den Haltern betätigen zu können. Dabei offenbart die genannte DE-A-197 17 011 einen sehr weit um nahezu 180° zur Seite nach außen schwenkenden Halter.

Ein Teil der genannten Druckschriften offenbart Stützen, die schwenkbar am Schlitten angebracht sind und die beim Ausfahren des Schlittens nach unten schwenken, so dass ein in die Einstellöffnung eingestellter Getränkebehälter auf der Stütze steht und mit Abstand oberhalb der Stütze in der Einstellöffnung des Halters seitlich abgestützt ist. Beim Einschieben des Schlittens gleiten die Stützen an Rändern von Öffnungen entlang und werden dadurch nach oben in den Halter bewegt.

Der Erfindung liegt die Aufgabe zugrunde, eine Haltevorrichtung der vorstehend erläuterten Art mit einer anderen, als eleganter angesehenen Konstruktion des Antriebs einer schwenkbaren Stütze für den Getränkebehälter vorzuschlagen.

Diese Aufgabe wird erfindungsgemäß durch die Merkmale des Anspruchs 1 gelöst. Bei der erfindungsgemäßen Haltevorrichtung ist der Halter mit der Einstellöffnung für den Getränkebehälter mit einem Schwenkgelenk schwenkbar am Schlitten angebracht. Eine Schwenkachse des Schwenkgelenks befindet sich im Seitenbereich des Schlittens. Das Schwenkgelenk ermöglicht eine Verschwenkung des Halters um ca. 90° zur Seite, so dass sich der Halter im wesentlichen seitlich neben dem Schlitten befindet. Der Schlitten läßt sich so ausbilden, daß er in der ausgezogenen Stellung nur wenig oder nicht aus dem Amaturenbrett oder dgl. vorsteht und dadurch unter der Haltevorrichtung angebrachte Bedien- oder Anzeigeinstrumente nicht verdeckt. Der Halter schwenkt soweit zur Seite, daß er unter der Haltevorrichtung angebrachte Bedien- oder Anzeigeelemente ebenfalls nicht verdeckt.

Des weiteren weist der Halter gemäß der Erfindung mindestens eine Stütze zum Abstützen eines in den Halter eingestellten Getränkebehälters von unten oder von der Seite auf, wobei die Stütze schwenkbar am Halter angebracht ist, um die Stütze bei Nichtgebrauch der Haltevorrichtung an den Halter anklappen oder in den Halter hineinklappen zu können. Dies hat den Vorteil, daß die Haltevorrichtung flach und damit bauraumsparend ausbildbar ist. Die Stütze weist eine seitlich abstehende Schwenkwelle auf, um die die Stütze schwenkbar ist. Zum Verschwenken der Stütze weist die Schwenkwelle eine Schraubenfläche auf, an der beim Schwenken des Halters ein Schlitten entlanggleitet und dadurch die Stütze verschwenkt.

In bevorzugter Ausgestaltung weist die erfindungsgemäße Haltevorrichtung eine Zwangssteuerung auf, die zwischen dem Schlitten und dem Halter wirksam ist und die die Schwenkbewegung des Halters aus der Verschiebung des Schlittens und/oder umgekehrt ableitet. Die Zwangssteuerung ordnet einen bestimmten Schwenkwinkel des Halters einer bestimmten Schiebestellung des Schlittens zwangsweise zu, so dass der Halter nicht unabhängig vom Schlitten und der Schlitten nicht unabhängig vom Halter bewegt werden kann. Die Zwangssteuerung kann beispielsweise als Kulissensteuerung ausgebildet sein mit einer ortsfesten, beispielsweise in einem Gehäuse der Haltevorrichtung angebrachten Kulissenbahn, in welche ein am Halter angebrachter Kulissenzapfen eingreift.

Bei einer Ausgestaltung der Erfindung weist die Haltevorrichtung ein Öffnungsfederelement auf, welches den Schlitten aus der eingeschobenen in die ausgezogene Stellung bewegt. Dies hat den Vorteil, daß der Schlitten selbsttätig in die ausgezogene Stellung verfährt. In der eingeschobenen Stellung wird der Schlitten beispielsweise mit einer entriegelbaren Verriegelungsvorrichtung gegen die Kraft des Öffnungsfederelements gehalten.

Bei einer Weiterbildung der Erfindung weist die Haltevorrichtung ein Zwischenelement auf, an welchem das Öffnungsfederelement angreift. Dieses Zwischenelement ist mittels einer Schiebeführung in Schieberichtung des Schlittens verschiebbar geführt, das Zwischenelement wird also nach Entriegelung des Schlittens vom Öffnungsfederelement verschoben. Am Zwischenelement ist ein Zahnrad drehbar angebracht, welches mit einer ortsfesten Zahnstange und auf einer gegenüberliegenden Seite mit einer schlittenfesten Zahnstange kämmt. Die beiden Zahnstangen sind in Schieberichtung des Schlittens verlaufend und parallel zueinander angeordnet, ihr Abstand voneinander ist so gewählt, daß das zwischen den beiden Zahnstangen befindliche Zahnrad mit beiden Zahnstangen kämmt. Durch die Verschiebung des Zwischenelements mit dem am Zwischenelement angreifenden Öffnungsfederelement wird das Zahnrad um den Verschiebeweg des Zwischenelements verschoben und, da es mit der ortsfesten Zahnstange kämmt, in Rotation versetzt. Die Verschiebung und Rotation des Zahnrads bewirkt, daß die schlittenfeste Zahnstange, mit der das Zahnrad ebenfalls kämmt, mit der doppelten Geschwindigkeit und um den doppelten Weg wie das Zwischenelement verschoben wird. Diese Ausgestaltung der Erfindung bewirkt somit, daß sich der Schlitten um den doppelten Weg wie das Zwischenelement, an dem das Öffnungsfederelement angreift, verschiebt. Diese Ausgestaltung der Erfindung hat den Vorteil, daß sie einen großen Verschiebeweg des Schlittens ermöglicht. Ein großer Verschiebeweg des Schlittens ist insbesondere dann notwendig, wenn sich der schwenkbar am Schlitten angebrachte Halter in Ausziehrichtung des Schlittens vor dem Schlitten befindet. Der Schlitten muß in diesem Fall so weit verschoben werden, daß sich der Halter vollständig vor dem Amaturenbrett oder dgl. des Kraftwagens befindet, damit der Halter um ca. 90° zur Seite geschwenkt werden kann.

Bei einer Weiterbildung der Erfindung weist der Schlitten ein Steuerelement, beispielsweise einen Steuerzapfen auf, der in eine Steuerbahn des Halters eingreift. Die Steuerbahn verläuft bogenförmig um die Schwenkachse des Halters herum, allerdings mit sich über die Länge der Steuerbahn änderndem Abstand von der Schwenkachse des Halters. Beim Schwenken des Halters bewirkt das in die Steuerbahn des Halters ein greifende Steuerelement eine Verschiebung des Schlittens, der seinerseits über die Schraubenfläche der Schwenkwelle die Stütze verschwenkt. Die Schwenkbewegung der Stütze wird auf diese Weise von der Schwenkbewegung des Halters abgeleitet.

Die Erfindung wird nachfolgend anhand eines in der Zeichnung dargestellten Ausführungsbeispiels näher erläutert. Es zeigen:
- Figur 1: eine erfindungsgemäße Haltevorrichtung in perspektivischer Darstellung schräg von unten;
- Figur 2: die Haltevorrichtung aus Figur 1 in perspektivischer Darstellung schräg von oben;
- Figur 3: die Haltevorrichtung gemäß Figur 2 in geschlossenem Zustand;
- Figur 4: eine Draufsicht auf die Haltevorrichtung aus Figuren 1 - 3 mit abgenommenen Oberteilen; und
- Figur 5: eine perspektivische Darstellung der Haltevorrichtung gemäß Figur 4.

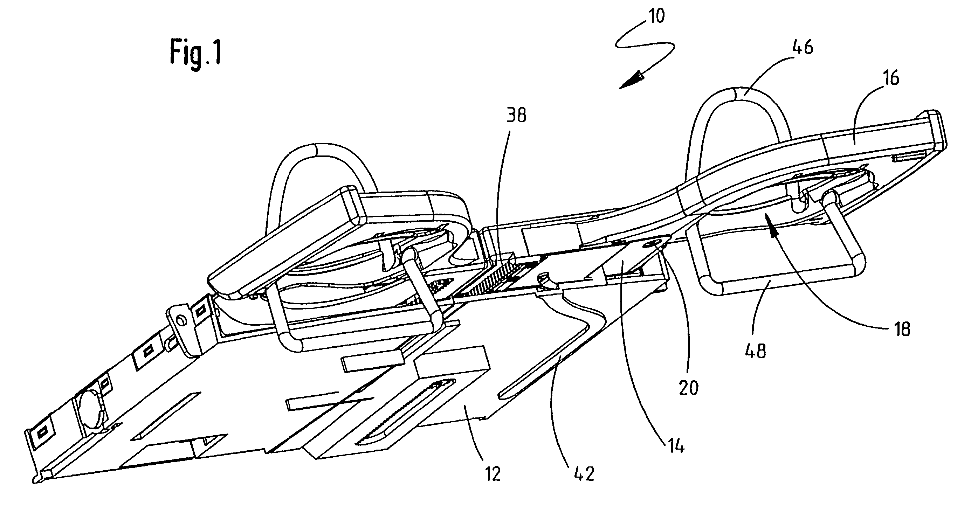

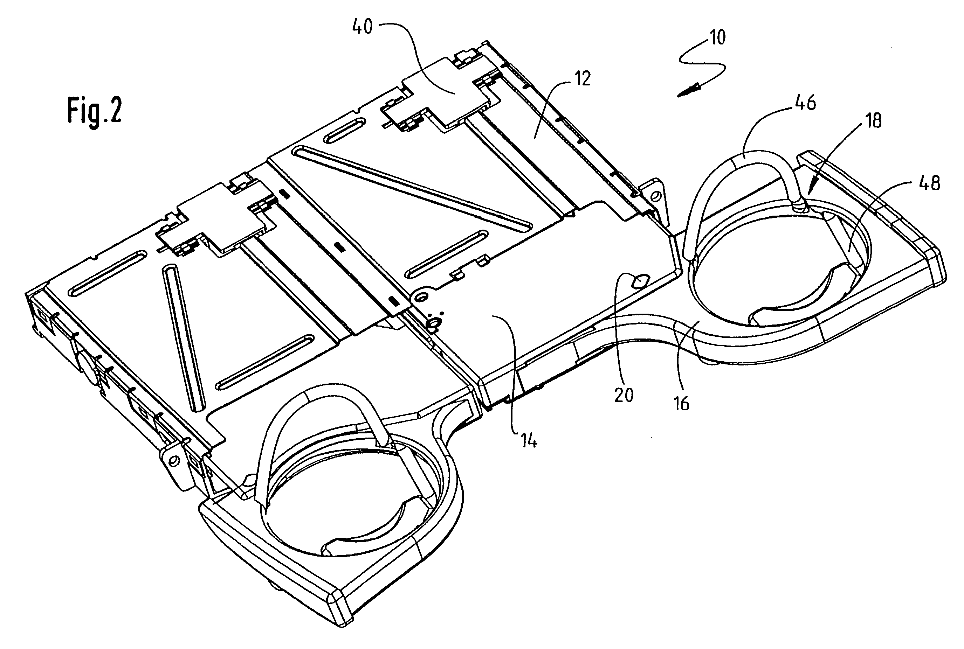

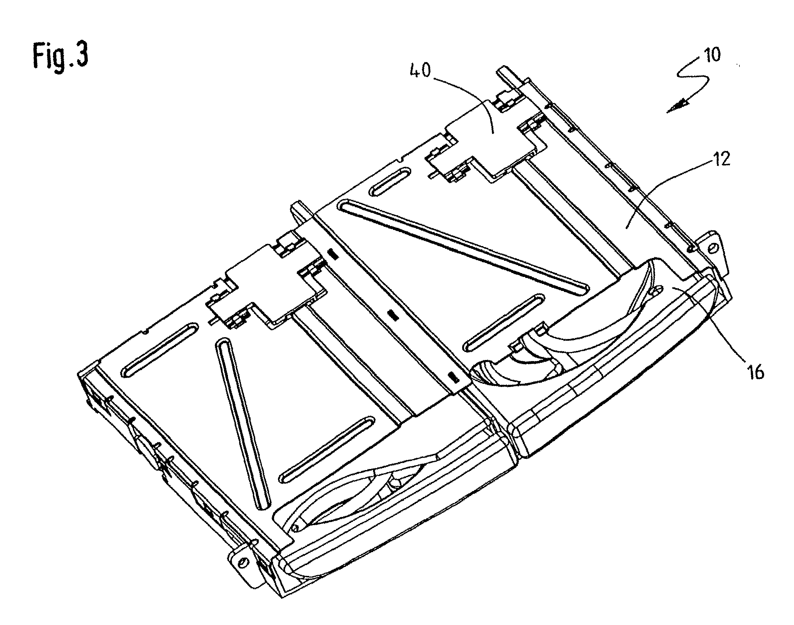

Die in Figuren 1 - 3 dargestellte, erfindungsgemäße Haltevorrichtung 10 weist ein flaches, schachtelförmiges, an einer Stirnseite offenes Doppelgehäuse 12 auf, das zum Einbau in eine Montageöffnung in einem nicht dargestellten Amaturenbrett eines Kraftwagens vorgesehen ist. In dem Doppelgehäuse 12 sind nebeneinander und unabhängig voneinander zwei Schlitten 14 schubladenartig verschiebbar geführt. Die Erfindung wird nachfolgend anhand des in der Zeichnung rechten Schlittens 14 erläutert, der linke Schlitten weist eine etwas abweichende Konstruktion auf. Der Schlitten 14 ist schachtelförmig, er weist ein Öffnung an seiner Vorderseite auf, in welcher ein Halter 16 schwenkbar angebracht ist. Der Halter 16 ist als Kastenbauteil ausgebildet, er weist ein rundes Loch auf, welches eine Einstellöffnung 18 zum Einstellen eines nicht dargestellten Getränkebehälters wie beispielsweise einer Getränkedose, einer Tasse oder eines Bechers bildet. Der Halter 16 ist mittels eines durch ihn und durch den Schitten 14 durchgesteckten Stiftes 20 schwenkbar mit dem Schlitten 14 verbunden. Der Stift 20 befindet sich an einer Vorderseite des Schlittens 14 nahe dessen Außenseite. Der Halter 16 ist um ca. 90° zur Seite schwenkbar, so dass er sich in seiner ausgeschwenkten, in Figuren 1 und 2 dargestellten Stellung, im wesentlichen seitlich neben der Haltevorrichtung 10 und neben dem Schlitten 14 befindet. Ist der Halter 16 wie in Figur 3 dargestellt eingeschwenkt, befindet er sich vor dem Schlitten 14. Der eingeschobene Schlitten 14 befindet sich nahezu an einer Rückseite des Doppelgehäuses 12. Sein Verschiebeweg entspricht in etwa einer Länge des Doppelgehäuses 12 in Verschieberichtung, da der Schlitten 14 in der ausgezogenen Stellung so weit aus dem Gehäuse 12 vorsteht, dass der Stift 20 und der Halter 16 sich vor dem Doppelgehäuse 12 befinden.

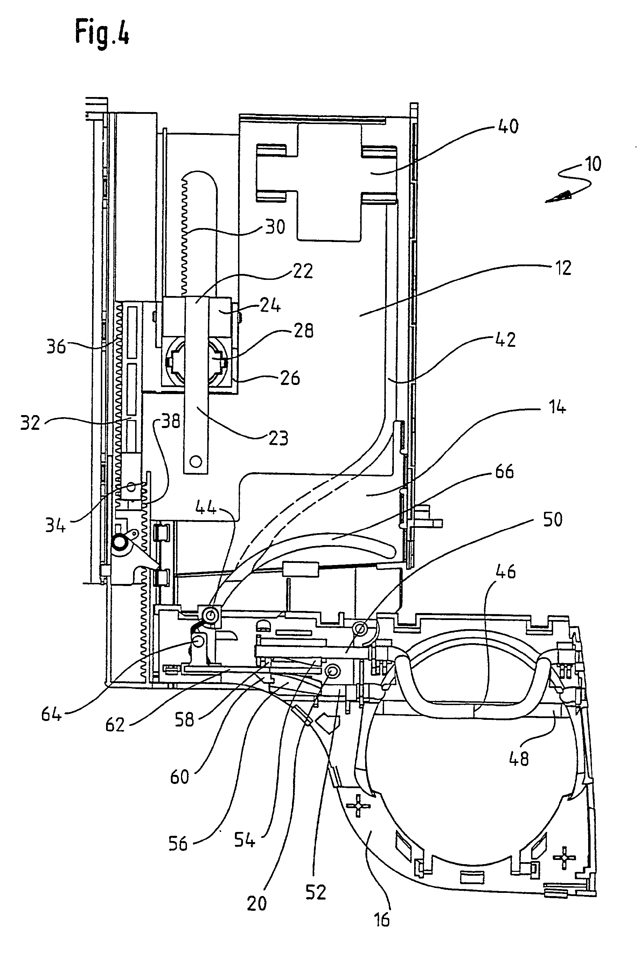

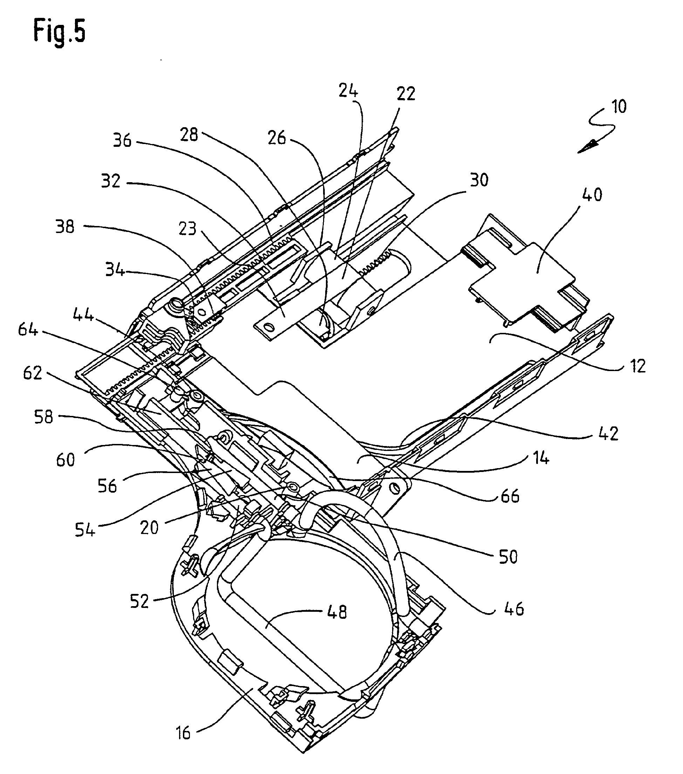

Aufbau und Funktion der erfindungsgemäßen Haltevorrichtung 10 wird nachfolgend anhand Figuren 4 und 5 erläutert, bei denen Oberteile des Doppelgehäuses 12, des Schlittens 14 und des Halters 16 abgenommen sind, so dass die Mechanik der Haltevorrichtung 10 sichtbar ist. Um den Schlitten 14 in die ausgezogene Position zu bewegen, weist die Haltevorrichtung 10 ein Öffnungsfederelement auf. Dieses ist als Rollfeder 22 ausgebildet. Die Rollfeder 22 ist eine Blattfeder, die sich aufgrund ihrer Elastizität selbst zu einem Wickel aufrollt. Die Rollfeder 22 ist also einer Zugfeder. Ein abgewickeltes Ende 23 der Rollfeder 22 ist an einem Boden des Doppelgehäuses 12 befestigt. Der Wickel der Rollfeder 22 ist auf einer Rolle 24 aufgewickelt, die um eine Achse drehbar in einem Zwischenelement 26 gelagert ist. Das Zwischenelement 26 ist in Verschieberichtung des Schlittens 14 verschiebbar im Doppelgehäuse 12 aufgenommen. In das Zwischenelement ist ein an sich bekanntes Rotationsdämpfungselement 28 eingesetzt, dessen Zahnrad mit einer gehäusefesten Zahnstange 30 kämmt. Das Rotationsdämpfungselement 28 dämpft die Verschiebebewegung des Zwischenelements 26 und damit auch die Verschiebebewegung des Schlittens 14. Die Rollfeder 22 zieht das Zwischenelement 26 im Doppelgehäuse 12 nach vorn.

Das Zwischenelement 26 weist einen Arm 32 auf, an dessen freiem Ende ein Zahnrad 34 drehbar gelagert ist. Das Zahnrad 34 kämmt mit einer mit dem Doppelgehäuse 12 einstückigen Zahnstange 36. Auf einer gegenüberliegenden Seite kämmt das Zahnrad 34 mit einer schlittenfesten, mit dem Schlitten 14 einstückigen Zahnstange 38. Das Zahnrad 34 übersetzt die Verschiebung des Zwischenelements 26 auf das doppelte, so dass der Schlitten 14 den doppelten Weg wie das Zwischenelement 26 zurücklegt.

In der eingeschobenen, in Figur 3 dargestellten Stellung wird der Schlitten 14 von einer an sich bekannten Push-Push oder Herzkurven-Verriegelungseinrichtung 40 gegen die Kraft der Rollfeder 22 gehalten. Die Verriegelungseinrichtung 40 ist durch einen kurzen Druck gegen eine Frontseite des Halters 16 entriegelbar.

Der Halter 16 wird von einem in der Zeichnung nicht dargestellten Torsionsfederelement zur Seite herausgeschwenkt. Das Torsionsfederelement ist auf den Stift 20, um den der Halter 16 schwenkbar ist, aufgesetzt, es stützt sich am Schlitten 14 ab und greift am Halter 16 an. Im Boden und in einer Decke des Doppelgehäuses 12 ist eine Kulissenbahn 42 angebracht, in welche ein Kulissenzapfen 44 des Halters 16 eingreift. Die Kulissenbahn 42 verläuft in einem hinteren Bereich des Doppelgehäuses 12 in Verschieberichtung des Schlittens 14 nahe einer Außenseite des Doppelgehäuses 12. Im vorderen Berech verläuft die Kulissenbahn 42 geschwungen schräg. Die Kulissenbahn 42 und der Kulissenzapfen 44 bilden eine Zwangssteuerung 42, 44 des Halters 16 und des Schlittens 14. Solange sich der Kulissenzapfen 44 des Halters 16 im hinteren, in Verschieberichtung des Schlittens 14 verlaufenden Teil der Kulissenbahn 42 befindet, verhindert die Kulissenbahn 42 ein Verschwenken des Halters 16. Erst wenn der Kulissenzapfen 44 in den geschwungenen, schräg verlaufenden vorderen Bereich der Kulissenbahn 42 gelangt, kann der Halter 16 verschwenken. Dabei sind die Schiebestellung des Schlittens 14 und die Schwenkstellung des Halters 16 voneinander abhängig, die Schwenkstellung des Halters 16 ist durch die Schiebestellung des Schlittens 14 vorgegeben. Die Zwangssteuerung 42, 44 verhindert, daß der Halter 16 bereits im Doppelgehäuse 10 verschwenkt und läßt die Schwenkbewegung des Halters 16 erst zu, wenn der Schlitten 14 soweit aus dem Doppelgehäuse 12 ausgezogen ist, daß sich der Halter 16 vor dem Doppelgehäuse 12 befindet.

Im Halter 16 sind zwei im wesentlichen U-förmige Bügel schwenkbar gelagert, die Stützen 46, 48 für einen in den Halter 16 eingestellten Getränkebehälter bilden. Eine der beiden Stützen 46 ist nach oben, die andere Stütze 48 nach unten schwenkbar. Die untere Stütze 48 dient zum Aufstellen des in den Halter 16 eingestellten Getränkebehälters, die andere Stütze 46 stützt den Getränkebehälter seitlich an dessen Umfang ab. Die beiden Stützen 46, 48 weisen eine seitlich abstehende Schwenkwelle 50, 52 auf, um die die Stützen 46, 48 schwenkbar sind. Die Schwenkwellen 50, 52 sind parallel mit Abstand voneinander schwenkbar im Halter 16 aufgenommen. Von den Schwenkwellen 50, 52 stehen schraubenförmig verlaufende Rippen 54, 56 ab. Die Rippen 54, 56 liegen mit Seitenflächen (Schraubenflächen) an Nasen 58, 60 an, die zu beiden Seiten von einem Schieber 62 abstehen. Der Schieber 62 ist parallel zu den Schwenkwellen 50, 52 verschiebbar im Halter 16 gelagert. Durch Verschieben des Schiebers 62 gleiten dessen Nasen 58, 60 an den schraubenförmig verlaufenden Rippen 54, 56 der Schwenkwellen 50, 52 der Stützen 46, 48 entlang und verschwenken dadurch die Stützen 46, 48 flach in den Halter 16 hinein. In der Gegenrichtung werden die Stützen 46, 48 in an sich bekannter Weise von Torsionsfederelementen, die in der Zeichnung nicht dargestellt sind, verschwenkt.

Der Schieber 62 weist nach oben und nach unten abstehende Steuerzapfen 64 auf, die den Halter 16 durchgreifen und verschiebbar in einer Steuerkurve 66 im Schlitten 14 einliegen. Die Steuerkurve 66 beschreibt einen Kreisbogen um den Stift 20, um welchen der Halter 16 schwenkbar ist. Jedoch befindet sich ein gedachter Mittelpunkt der Steuerkurve 66 mit Abstand neben dem Stift 20, so dass sich ein Abstand der Steuerkurve 66 vom Stift 20, um den der Halter 16 schwenkbar ist, über die Länge der Steuerkurve 66 ändert. Durch diese Änderung des Abstands der Steuerkurve 66 vom Stift 20, um den der Halter 16 schwenkbar ist, wird über den Steuerzapfen 64, der in der Steuerkurve 66 einliegt, der Schieber 62 im Halter 16 verschoben, wenn der Halter 16 am Schlitten 14 verschwenkt wird. Durch seine Verschiebung verschwenkt der Schieber 62 die Stützen 46, 48 wie oben beschrieben.

## Patentansprüche

1. Haltevorrichtung für einen Getränkebehälter, die zum Einbau in einem Kraftwagen vorgesehen ist, mit einem mit einer Schiebeführung schubladenartig aus einer eingeschobenen in eine ausgezogene Stellung verschiebbar geführten Schlitten (14), und mit einem Halter (16), der eine Einstellöffnung (18) zum Einstellen des Getränkebehälters aufweist und der mit einem Schwenkgelenk (20) um ca. 90° zur Seite schwenkbar am Schlitten (14) angebracht ist, so dass sich der Halter (16) in einer ausgeschwenkten Stellung im wesentlichen seitlich neben dem Schlitten (14) befindet, wobei der Halter (16) mindestens eine Stütze (46, 48) für einen in den Halter (16) eingestellten Getränkebehälter aufweist, die schwenkbar am Halter (16) angebracht ist, **dadurch gekennzeichnet, dass** die Stütze (46, 48) eine seitlich abstehende Schwenkwelle (50, 52) aufweist, um die die Stütze (46, 48) schwenkbar ist, dass die Schwenkwelle (50, 52) eine Schraubenfläche (54, 56) aufweist, und dass am Halter (16) ein Schieber (62) angebracht ist, der durch die Schwenkbewegung des Halters (16) angetrieben wird und der an der Schraubenfläche (54, 56) der Schwenkwelle (50, 52) entlang gleitet und die Stütze (46, 48) verschwenkt.

2. Haltevorrichtung nach Anspruch 1, **dadurch gekennzeichnet, dass** die Haltevorrichtung (10) eine zwischen dem Schlitten (14) und dem Halter (16) wirksame Zwangssteuerung aufweist, welche eine Schwenkstellung des Halters (16) in Bezug auf eine Schiebestellung des Schlittens (14) festlegt.

3. Haltevorrichtung nach Anspruch 1, **dadurch gekennzeichnet, dass** die Haltevorrichtung (10) ein Öffnungsfederelement (22) aufweist, welches den Schlitten (14) aus der eingeschobenen in die ausgezogene Stellung bewegt.

4. Haltevorrichtung nach Anspruch 3, **dadurch gekennzeichnet, dass** das Öffnungsfederelement (22) an einem Zwischenelement (26, 32) angreift, welches mit einer Schiebeführung in Schieberichtung des Schlittens (14) verschiebbar geführt ist, und daß am Zwischenelement (26, 32) ein Zahnrad (34) um eine zur Schieberichtung senkrechte Achse drehbar angebracht ist, das mit einer ortsfesten Zahnstange (36) und mit einer gegenüberliegend angeordneten, schlittenfesten Zahnstange (38) kämmt, wobei beide Zahnstangen (36, 38) in Schieberichtung verlaufen.

5. Haltevorrichtung nach Anspruch 1, **dadurch gekennzeichnet, dass** der Schieber (62) ein Steuerelement (64) aufweist, welches in eine Steuerbahn (66) des Schlittens (14) eingreift, die bogenförmig um eine Schwenkachse (20) des Halters (16) verläuft, wobei sich ein Abstand der Steuerbahn (66) von der Schwenkachse (20) des Halters (16) über die Länge der Steuerbahn (66) ändert.

## Claims

1. Holding device for a drinks container, for installation in a motor vehicle, having a carriage (14) displaceably guided from an inserted position into a pulled-out position in the manner of a drawer by means of a sliding guide element, and having a holder (16) that has an insertion opening (18) for the insertion of the drinks container and that is pivotally mounted on the carriage (14) by a pivotal joint (20) to be pivotable through approximately 90° to the side so that, in a pivoted-out position, the holder (16) is located substantially at the side, next to the carriage (14), the holder having at least one support (46, 48) for a drinks container inserted into the holder (16), which support is pivotally mounted on the holder (16), **characterised in that**, the support (46, 48) has a laterally projecting pivotal shaft (50, 52) about which the support (46, 48) is pivotable, that the pivotal shaft (50, 52) has a threaded surface (54, 56), and that mounted on the holder (16) is a slide member (62), which is driven by the pivoting movement of the holder (16) and which slides along the threaded surface (54, 56) of the pivotal shaft (50, 52) and pivots the support (46, 48).

2. Holding device according to claim 1, **characterised in that** the holding device (10) has a positive control means effective between the carriage (14) and the holder (16), which control means fixes a pivotal position of the holder (16) relative to a sliding position of the carriage (14).

3. Holding device according to claim 1, **characterised in that** the holding device (10) has an opening spring element (22) which moves the carriage (14) from the inserted position into the pulled-out position.

4. Holding device according to claim 3, **characterised in that** the opening spring element (22) engages an intermediate element (26, 32) which is displaceably guided by a sliding guide element in the direction in which the carriage (14) slides, and there is mounted on the intermediate element (26, 32), to rotate about an axis perpendicular to the sliding direction, a toothed wheel (34) which engages with a fixed-position toothed rack (36) and with a toothed rack (38) arranged opposite thereto which is fixed relative to the carriage, both toothed racks (36, 38) extending in the sliding direction.

5. Holding device according to claim 1, **characterised in that** the slide member (62) has a control element (64) which engages in a control track (66) in the carriage (14), which control track follows an arcuate path around a pivotal axis (20) of the holder (16), the spacing of the control track (66) from the pivotal axis (20) of the holder (16) varying over the length of the control track (66).

## Revendications

1. Dispositif de maintien pour récipient de boisson, prévu pour être intégré dans un véhicule automobile et comprenant un chariot (14) guidé à coulissement à l'aide d'un guide coulissant, à la manière d'un tiroir, d'une position rentrée à une position déployée ; et un support (16) qui est pourvu d'un orifice (18) d'ajustement du récipient de boisson et qui est implanté sur le chariot (14) avec faculté de pivotement d'environ 90° vers le côté, par une articulation pivotante (20), de telle sorte que ledit support (16) jouxte pour l'essentiel le chariot (14) dans le sens latéral, dans une position sortie par pivotement, ledit support (16) comportant au moins un soutien (46, 48) monté à pivotement sur ledit support (16), et affecté à un récipient de boisson ajusté dans ledit support (16), **caractérisé par le fait que** le soutien (46, 48) présente un arbre de pivotement (50, 52) saillant latéralement, autour duquel ledit soutien (46, 48) peut pivoter, **par le fait que** l'arbre de pivotement (50, 52) possède une surface hélicoïdale (54, 56); et **par le fait qu'**un coulisseau (62) monté sur le support (16) est entraîné par le mouvement pivotant dudit support (16), glisse le long de la surface hélicoïdale (54, 56) de l'arbre de pivotement (50, 52), et fait pivoter le soutien (46, 48).

2. Dispositif de maintien selon la revendication 1, **caractérisé par le fait que** ledit dispositif de maintien (10) présente une commande forcée qui agit entre le chariot (14) et le support (16), et établit fermement une position dudit support (16), prise par pivotement, vis-à-vis d'une position du chariot (14) prise par coulissement.

3. Dispositif de maintien selon la revendication 1, **caractérisé par le fait que** ledit dispositif de maintien (10) possède un élément à ressort d'ouverture (22) imprimant un mouvement, au chariot (14), de la position rentrée à la position déployée.

4. Dispositif de maintien selon la revendication 3, **caractérisé par le fait que** l'élément à ressort d'ouverture (22) vient en prise avec un élément intercalaire (26, 32) qui est guidé à coulissement, par un guide coulissant, dans la direction de coulissement du chariot (14) ; et **par le fait qu'**une roue dentée (34) montée à rotation sur l'élément intercalaire (26, 32), autour d'un axe perpendiculaire à la direction de coulissement, est en prise d'engrènement avec une crémaillère fixe (36) et avec une crémaillère (38) faisant corps avec le chariot, et située en vis-à-vis, les deux crémaillères (36, 38) s'étendant dans la direction de coulissement.

5. Dispositif de maintien selon la revendication 1, **caractérisé par le fait que** le coulisseau (62) présente un élément de commande (64) pénétrant dans une piste de commande (66) du chariot (14) qui s'étend, en arc de cercle, autour d'un axe de pivotement (20) du support (16), sachant qu'une distance, comprise entre ladite piste de commande (66) et ledit axe de pivotement (20) du support (16), varie sur la longueur de ladite piste de commande (66).
